# EUROPEAN PATENT SPECIFICATION

(11) **EP 0 801 599 B1**
(45) Date of publication and mention of the grant of the patent: **01.12.1999**
(21) Application number: 95930764.6
(22) Date of filing: 28.08.1995
(51) Int. Cl.: B23K 1/00, F28F 19/02, C23F 15/00

(54) **HEAT EXCHANGER AND METHOD FOR THE MANUFACTURING THEREOF**
WÄRMETAUSCHE UND VERFAHREN ZU IHREN HERSTELLUNG
ECHANGEUR THERMIQUE ET PROCEDE DE FABRICATION

(30) Priority: 01.09.1994 SE 9402904
(43) Date of publication of application: 22.10.1997
(73) Proprietor: Persson, Lars, 237 00 Bjärred (SE)
(72) Inventor: Persson, Lars, 237 00 Bjärred (SE)
(74) Representative: Akerman, Marten Lennart
(86) International application number: SE9500965
(87) International publication number: WO9606705

(56) References cited:
- WO-A-92/16310
- PATENT ABSTRACTS OF JAPAN, Vol. 16, No. 569, M-1343; & JP,A,04 220 163 (TOYO RADIATOR CO LTD), 11 August 1992.

## Description

### TECHNICAL AREA

The present invention relates to heat exchangers and methods for manufacturing thereof. More specifically, the invention relates to fully brazed heat exchangers having an improved durability through protection of the brazed joints by means of a coating.

Within the refrigeration industry, a substantial demand has arisen for heat exchangers able to withstand ammonia, as the use of freons has been successively prohibited. The invention provides, in a simple and inexpensive manner, leak-proof and resistant heat exchangers that can be utilized together with ammonia.

### STATE OF THE ART

The fully brazed heat exchangers of today are manufactured from sheet steel and brazed together with copper solder. Copper is presently the most durable and least expensive soldering material, When switching from freons to ammonia, however, copper can no longer be used, as it is dissolved by ammonia. This problem has been approached in different ways.

One method is to use nickel instead of copper as the brazing material. Nickel is however less durable and more expensive than copper.

Another method is welding the plates together instead of using the brazing method. However, welding is a more expensive and complicated method than brazing.

The present invention solves the problem in a simpler and less costly way, by applying a protective coating on top of the brazed joints.

The document WO-A-92/16310 is considered to represent the most relevant state of the art. The document discloses a method for the manufacture of heat exchangers for circulation of an aggressive medium and a heat exchanger produced thereby. The method comprises the brazing together of cover plates and duct plates being made of a material resistant to the medium with the use of a solder of less resistant material than the plates; the circulation of a coat forming material through the brazed together heat exchanger during a period of time long enough for wetting the brazing joints to be protected; the subsequent removal of the excessive coat-forming material, whereby a coating is left at the brazing joints. The coating consists of plastics circulated in the form of a mist or in an evaporated form.

However, the present inventor has realized that a more resistant coating is provided by letting the coating material at least partially diffuse into the brazing material. This is achieved by using a coating material consisting of silver or tin which is circulated in liquid form through the heat exchanger.

### SUMMARY OF THE INVENTION

The present invention thus provides a heat exchanger for the ciculation of an aggressive medium according to claim 1 and methods for the manufacture of heat exchangers according to claims 3 and 6. A heat exchanger according to the invention comprises cover plates and duct plates made of materials resistant to the medium. The plates are brazed together using a less resistant material.

The existing brazing joints are protected by a coating resistant to the aggressive medium. According to the invention, the coating consists of a material which is able to diffuse into the brazing material, namely tin or silver. The invention also provides a method for the manufacture of such a heat exchanger. According to the invention, a coat-forming material in liquid form is circulated through the brazed-together heat exchanger during a period of time long enough for wetting the brazing joints to be protected. The excessive coat-forming material is then removed, whereby a coating is left at the brazing joints.

The invention is set forth in further detail in the accompanying claims.

### BRIEF DESCRIPTION OF DRAWINGS

The invention will now be described with reference to the accompanying drawings, in which:
- Fig. 1: is a side view of the heat exchanger according to an embodiment of the invention;
- Fig. 2: is a top view of said heat exchanger;
- Fig. 3: shows a cross sectional view along the line III in Fig. 2; and
- Fig. 4: is a detail sectional view showing a brazed joint with the coating applied.

### DETAILED DESCRIPTION OF PREFERRED EMBODIMENTS

The drawings show one embodiment form of the present invention. The heat exchanger comprises a top cover plate 1 and a bottom cover plate 2. The top cover plate has four connection ports 4 for medium inlet and outlet. Between the cover plates, a number of duct plates are stacked against each other so as to form a plurality of ducts inside which the medium can circulate.

Conventionally, the heat exchanger is manufactured by placing copper foil (not shown) between the individual duct plates 3 and between the cover plates and their respective adjoining duct plates. The whole stack is held together under pressure and brazed in a vacuum oven.

However, as mentioned previously, copper cannot be exposed to ammonia as it will then dissolve. As copper is a relatively inexpensive and durable material, it is however desirable to continue using copper. According to the invention, the brazed joints are thus protected by a coating.

Preferred coating materials are silver and tin.

The method for manufacturing the heat exchanger according to the invention is described in detail below. When the assembly of cover plates 1, 2 and duct plates 3 has been brazed together with the copper solder, a coat-forming material is poured in through the connection ports 4, until the unit is completely filled. There must be no air left in the material. The coating material is allowed to circulate until all internal surfaces have been wetted. The material is then emptied out.

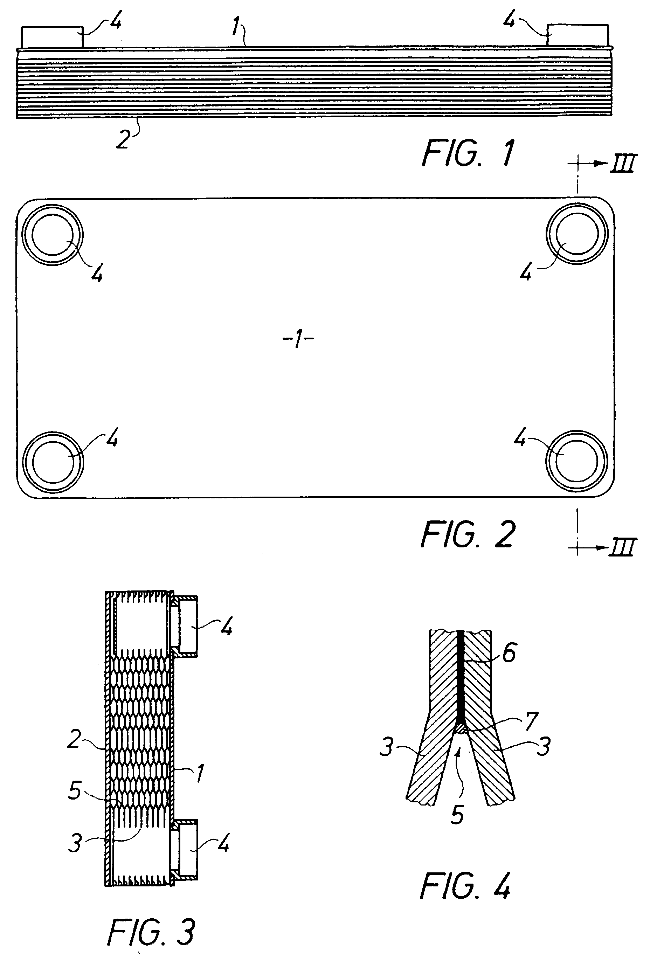

As illustrated in detail by Fig. 4, a small drop 7 of the coating material is then left close to the copper solder 6. The coating material is held there by the capillary forces. Other internal surfaces of the unit will have only a very thin coating. This means that the coating material is used efficiently. The thin coating does not fulfill any specific function and any cracks forming in it will be of no importance, as the plates themselves are sufficiently resistant to ammonia.

One of the alternatives is to tin coat the brazed joints. Tin is a material adhering very strongly to copper due to its diffusion into the copper, and tin also has an excellent resistance to ammonia. First, the heat exchanger is pickled in the conventional way. Thereafter, the heat exchanger is heated and evacuated to a low vacuum in order to facilitate the penetration of the tin. Fluid tin is poured in and allowed to circulate. After circulating for an appropriate length of time, the tin is discharged. Preferably, the tin is blown out by hot nitrogen to push out excessive coating material. The tin drops remaining at the brazing joints are then allowed to solidify, to form a tin coating. Part of the tin diffuses into the brazing material, i.e. the copper, creating a very strong bond.

Another alternative is to silver plate the brazing joints by using a water solution of silver nitrate as the coat-forming material. This material is allowed to circulate in the same way and is then discharged, whereupon drops of the solution remain at the brazing joints. Some silver ions are exchanged against copper ions of the brazing material, and are thus diffusing into the copper. The water is then vaporized, preferably by heating the unit, and silver is precipitated at the brazing joints. To further reinforce the bond between the silver and the brazing material, the heat exchanger may subsequently be heated to about 800 °C. This increases the diffusion of silver into the brazing material and a very strong bond is achieved.

The present invention thus provides several advantages compared to the previously known art. Thanks to the fact that copper can still be used, a very durable product is achieved, yet having a favourable manufacturing cost. The coating material is collected at the brazing joints where it is best needed, which also entails a low consumption of coating material. Neither does said material entail any weakening, as it deposits on top of the existing unit surfaces without affecting them.

It is preferred that the cover plates and duct plates are manufactured from acid-resistant stainless steel and that copper solder is used, but the invention as such can also be applied to other materials. The invention is solely limited by the accompanying claims.

## Claims

1. Heat exchanger for the circulation of an aggressive medium, comprising cover plates (1, 2) and duct plates (3) made from a material resistant to the medium, the plates being brazed together with a material (6), which is less resistant than the plates to the medium, the existing brazing joints being protected by a coating (7) which withstands the aggressive medium, characterized in that the coating (7) has at least partially diffused into the brazing material, and that the protective coating consists of silver or tin.

2. Heat exchanger according to claim 1, characterized in that the cover plates (1, 2) and the duct plates (3) are made from acid-resistant stainless steel and that the solder (6) is copper solder.

3. Method for the manufacture of heat exchangers for circulation of an aggressive medium, comprising the brazing together of cover plates (1, 2) and duct plates (3) made from a material resistant to the medium with the use of a solder, which is less resistant than the plates to the medium (6), the circulation of a coat-forming material through the brazed-together heat exchanger during a period of time long enough for wetting the brazing joints (5) to be protected, the subsequent removal of excessive coat-forming material, whereby a coating (7) is left at the brazing joints (5), characterized in
that the coat-forming material is in liquid form,
that the coat-forming material is allowed, at least partially, to diffuse into the brazing material, and
in that the coat-forming material is a water solution of silver nitrate which is brought to circulate through the heat exchanger during said period of time, whereupon it is discharged, and in that the water in the remaining solution at the brazing joints (6) is vaporized to precipitate silver.

4. Method according to claim 3, characterized in that the water is vaporized by heating the heat exchanger.

5. Method according to claim 4, characterized in that the heat exchanger is aftertreated by heating it to 800 °C

6. Method for the manufacture of heat exchangers for circulation of an aggressive medium, comprising the brazing together of cover plates (1, 2) and duct plates (3) made from a material resistant to the medium with the use of a solder, which is less resistant than the plates to the medium (6), the circulation of a coat-forming material through the brazed-together heat exchanger during a period of time long enough for wetting the brazing joints (5) to be protected, the subsequent removal of excessive coat-forming material, whereby a coating (7) is left at the brazing joints (5), characterized in
that the coat-forming material is in liquid form,
that the coat-forming material is allowed, at least partially, to diffuse into the brazing material, and in that the coat-forming material is tin, the heat exchanger being heated and tin in liquid form brought to circulate through the heat exchanger during said period of time and subsequently being discharged, whereupon the remaining tin at the brazing joints (6) is allowed to solidify to form a tin coating.

7. Method according to claim 6, characterized in that the heat exchanger is evacuated to a low vacuum before the tin is introduced and brought to circulate, the tin subsequently being blown out of the heat exchanger by means of hot nitrogen gas.

## Patentansprüche

1. Wärmeübertrager für die Zirkulation eines aggressiven Mediums, mit Abdeckplatten (1, 2) und Leitungsplatten (3) aus einem gegenüber dem Medium widerstandsfähigen Material, wobei die Platten mit einem Material (6) verlötet sind, weiches weniger widerstandsfähig gegenüber dem Medium ist als die Platten, und wobei die bestehenden Lötverbindungen durch eine Beschichtung (7) geschützt sind, welche dem aggressiven Medium widersteht,
dadurch gekennzeichnet, daß die Beschichtung (7) wenigstens teilweise in das Lötmaterial diffundiert ist, und daß die schützende Beschichtung aus Silber oder Zinn besteht.

2. Wärmeübertrager nach Anspruch 1,
dadurch gekennzeichnet, daß die Abdeckplatten (1, 2) und die Leitungsplatten (3) aus einem säurebeständigen rostfreien Stahl bestehen und das Lot (6) ein Kupferlot ist.

3. Verfahren zum Herstellen von Wärmeübertragern für die Zirkulation eines aggressiven Mediums mit den Verfahrensschritten Zusammenlöten von Abdeckplatten (1, 2) und Leitungsplatten (3), die aus einem gegenüber dem Medium widerstandsfähigen Material bestehen, unter Verwendung eines Lots, welches weniger widerstandsfähig gegenüber dem Medium (6) ist als die Platten, Zirkulation eines beschichtungsbildenden Materials durch den verlöteten Wärmeübertrager während einer Zeitdauer, die lang genug ist, um die zu beschichtenden Lötverbindungen (5) zu befeuchten, und anschließendes Entfernen von überschüssigem beschichtungsbildenden Material, wobei eine Beschichtung (7) an den Lötverbindungen (5) verbleibt,
dadurch gekennzeichnet, daß das beschichtungsbildende Material in flüssiger Form vorliegt, daß es dem beschichtungsbildenden Material möglich ist, wenigstens teilweise in das Lotmaterial zu diffundieren, und
daß das beschichtungsbildende Material eine Wasserlösung aus Silbernitrat ist, die während der besagten Zeitdauer durch den Wärmeübertrager zirkuliert und anschließend abgegeben wird, und daß das Wasser in der verbleibenden Lösung an den Lötverbindungen (6) verdampft wird, um Silber abzulagern.

4. Verfahren nach Anspruch 3,
dadurch gekennzeichnet, daß das Wasser verdampft wird durch Beheizen des Wärmeübertragers.

5. Verfahren nach Anspruch 4,
dadurch gekennzeichnet, daß der Wärmeübertrager nachbehandelt wird durch Beheizen auf 800°C.

6. Verfahren zum Herstellen von Wärmeübertragern für die Zirkulation eines aggressiven Mediums mit den Verfahrensschritten Zusammenlöten von Abdeckplatten (1, 2) und Leitungsplatten (3), die aus einem gegenüber dem Medium widerstandsfähigen Material bestehen, unter Verwendung eines Lots, welches weniger widerstandsfähig gegenüber dem Medium (6) ist als die Platten, Zirkulation eines beschichtungsbildenden Materials durch den verlöteten Wärmeübertrager während einer Zeitdauer, die lang genug ist, um die zu beschichtenden Lötverbindungen (5) zu befeuchten und anschließendes Entfernen von überschüssigem beschichtungsbildenden Material, wobei eine Beschichtung (7) an den Lötverbindungen (5) verbleibt,
dadurch gekennzeichnet, daß das beschichtungsbildende Material in flüssiger Form vorliegt, daß es dem beschichtungsbildenden Material möglich ist, wenigstens teilweise in das Lotmaterial zu diffundieren, und daß das beschichtungsbildende Material Zinn ist, wobei der Wärmeübertrager beheizt wird und Zinn in flüssiger Form veranlaßt wird, durch den Wärmeübertrager während der besagten Zeitdauer zu zirkulieren und anschließend abgegeben wird, woran anschließend das verbleibende Zinn an den Lötverbindungen (6) verfestigt, um eine Zinnbeschichtung zu bilden.

7. Verfahren nach Anspruch 6,
dadurch gekennzeichnet, daß der Wärmeübertrager vor der Einleitung und Zirkulation von Zinn auf ein geringes Vakuum evakuiert wird und das Zinn anschließend aus dem Wärmeübertrager ausgeblasen wird mittels eines heißen Stickstoffgases.

## Revendications

1. Echangeur de chaleur pour la circulation d'un fluide agressif, comprenant des plaques de couverture (1,2) et des plaques de circulation (3) en une matière résistant au fluide, les plaques étant brasées les unes aux autres au moyen d'une matière (6) qui est moins résistante que les plaques au fluide, les joints de brasage existants étant protégés par un revêtement (7) qui résiste au fluide agressif, caractérisé en ce que le revêtement (7) a au moins partiellement diffusé dans la matière de brasage, et en ce que le revêtement protecteur est constitué d'argent ou d'étain.

2. Echangeur de chaleur selon la revendication 1, caractérisé en ce que les plaques de couverture (1,2) et les plaques de circulation (3) sont en acier inoxydable résistant à l'acide et en ce que la matière de soudage (6) est une matière de soudage à base de cuivre.

3. Procédé de fabrication d'échangeurs de chaleur pour la circulation d'un fluide agressif, comprenant le brasage, les unes aux autres, de plaques de couverture (1,2) et de plaques de circulation (3) en une matière résistant au fluide, au moyen d'une matière de soudage (6) qui est moins résistante que les plaques au fluide, la circulation d'une matière de formation de revêtement à travers l'échangeur de chaleur assemblé par brasage pendant une durée assez longue pour mouiller les joints de brasage (5) à protéger, l'enlèvement subséquent de la matière de formation de revêtement en excès, de façon à laisser un revêtement (7) à l'endroit des joints de brasage (5), caractérisé en ce que :
la matière de formation de revêtement est sous forme liquide,
la matière de formation de revêtement peut diffuser, au moins partiellement, dans la matière de brasage,
la matière de formation de revêtement est une solution aqueuse de nitrate d'argent qui est mise en circulation dans l'échangeur de chaleur pendant ladite durée, après quoi elle est évacuée, et
l'eau dans la solution restant à l'endroit des joints de brasage (5) est vaporisée pour précipiter l'argent.

4. Procédé selon la revendication 3, caractérisé en ce que l'eau est vaporisée par chauffage de l'échangeur de chaleur.

5. Procédé selon la revendication 4, caractérisé en ce que l'échangeur de chaleur est soumis à un post-traitement par chauffage de l'échangeur à 800°C.

6. Procédé de fabrication d'échangeurs de chaleur pour la circulation d'un fluide agressif, comprenant le brasage, les unes aux autres, de plaques de couverture (1,2) et de plaques de circulation (3) en une matière résistant au fluide, au moyen d'une matière de soudage (6) qui est moins résistante que les plaques au fluide, la circulation d'une matière de formation de revêtement à travers l'échangeur de chaleur assemblé par brasage pendant une durée assez longue pour mouiller les joints de brasage (5) à protéger, et l'enlèvement subséquent de la matière de formation de revêtement en excès de sorte qu'un revêtement (7) est laissé à l'endroit des joints de brasage (5), caractérisé en ce que :
la matière de formation de revêtement est sous forme liquide,
on laisse la matière de formation de revêtement diffuser, au moins partiellement, dans la matière de brasage, et
la matière de formation de revêtement est de l'étain, l'échangeur de chaleur étant chauffé et l'étain sous forme liquide étant mis en circulation à travers l'échangeur de chaleur pendant ladite durée et étant ensuite évacué, après quoi on laisse l'étain restant à l'endroit des joints de brasage (5) se solidifier pour former un revêtement d'étain.

7. Procédé selon la revendication 6, caractérisé en ce que l'échangeur de chaleur est mis sous vide, à une faible valeur de vide, avant l'introduction et la mise en circulation de l'étain, l'étain étant ensuite chassé par soufflage de l'échangeur de chaleur au moyen d'azote gazeux chaud.
